# FASCICULE DE BREVET EUROPEEN

(11) **EP 0 878 998 B1**
(45) Date de publication et mention de la délivrance du brevet: **18.04.2001**
(21) Numéro de dépôt: 97907129.7
(22) Date de dépôt: 26.02.1997
(51) Int. Cl.: A23G 9/02, A23G 9/04

(54) **DESSERT GLACE**
GEFRORENE SÜSSSPEISEN
FROZEN DESSERT

(30) Priorité: 26.02.1996 FR 9602527
(43) Date de publication de la demande: 25.11.1998
(73) Titulaire: Societe Civile R.S.A., 31520 Ramonville-Saint-Agne (FR)
(72) Inventeur: RIVIERE, Philippe, F-31400 Toulouse (FR); SILVENTE, Stéphane, F-31000 Toulouse (FR); TONON, Frank, F-27930 Normanville (FR); ANDRE-LINET, Véronique, F-27930 Gravigny (FR)
(74) Mandataire: Ravina, Bernard
(86) Numéro de dépôt international: FR9700338
(87) Numéro de publication internationale: WO9730600

(56) Documents cités:
- FR-A- 2 187 234
- GB-A- 1 563 191
- GB-A- 2 019 187
- US-A- 4 244 977
- US-A- 4 400 406
- US-A- 4 421 778
- US-A- 4 552 773
- US-A- 4 808 428
- US-A- 4 853 243
- US-A- 5 084 295
- PATENT ABSTRACTS OF JAPAN vol. 9, no. 108 (C-180), 11 Mai 1985 & JP 60 002151 A (AZAKI ATSUKO), 8 Janvier 1985,

## Description

La présente invention concerne un dessert glacé.

Le dessert glacé selon l'invention est du type comprenant essentiellement des protéines d'origine laitière, des matières grasses, des agents sucrants et un ou des agents stabilisants.

Le dessert glacé selon l'invention pourra, selon les besoins, contenir des agents aromatisants, des agents colorants ou des inclusions comestibles, où entre lui-même inclus dans des pâtisseries par exemple avec un enrobage de pâte.

Ces produits sont habituellement obtenus par congélation des composants ci-dessus énoncés et leur conservation jusqu'à consommation suppose le maintien en froid négatif, la température de congélation pouvant aller jusqu'à moins 18° et même moins 24° centigrades.

De ce fait, les produits obtenus sauf à subir une période de réchauffement, présentent une consistance particulièrement dure qui empêche leur consommation immédiate et rend leur division à la cuillère impossible ou du moins difficile.

Dans le cas de portion importante, lorsque la portion n'a pas été entièrement consommée, sa conservation après réchauffement pour division, suppose une recongélation qui a des incidences sur la structure du produit avec réalisation de gros cristaux donnant en bouche un goût aqueux et une texture plus dure et présente des risques bactériologiques.

De plus, ces produits après décongélation jusqu'à température de consommation perdent une partie de leurs propriétés de stabilité et de leurs qualités gustatives. L'art antérieur a proposé des solutions :

Le brevet GB 1563191 se propose de réaliser une crème glacée qui est cuillérable à température de congélation et dont la composition contient à la fois des agents stabilisants et des produits du type glycérol qui abaissent le point de congélation.

Le brevet GB 2019187 décrit une préparation analogue au brevet précédent dans lequel outre les stabilisants et les produits du type glycérol, les agents sucrants utilisés sont des agents sucrants à faible poids moléculaire du type sucrose, glucose, fructose, sucre inverti qui entrent dans la composition pour leur capacité à abaisser son point de congélation.

Le brevet US A 4 400 406 (MORLEY 8/83) concerne un dessert glacé qui peut être extrudé ; cependant, dans la partie concernant l'extrusion de la glace, il n'y a pas de référence à la température qui est vraisemblablement de l'ordre de -5 à 6°C. Il n'est pas fait mention d'extrusion à -20°C.
Selon l'exemple six, il est fait usage d'huile de noix de coco, dont le point de fusion est élevé, à un taux de 11%. Dans ces conditions, l'huile de noix de coco donne un produit dur non cuillérable.

Dans la composition du brevet MORLEY US 4 400 406, les auteurs utilisent un mélange de fructose, sorbitol et sirop de maïs (remplaçable par de l'hydrolysât d'amidon ou sucre inverti). Le choix de sirop de maïs est classique. La présence de sorbitol est justifiée par un besoin de compenser le peu de fructose, qui autrement donne trop de goût sucré au produit. En ce qui concerne le choix de stabilisant, le brevet US 4 400 406 mentionne la liste quasi exhaustive de tous les produits du domaine connu. Le produit selon ce brevet se caractérise par un choix de pourcentage particulier de stabilisant et par une combinaison expresse de trois agents stabilisants différents, dont la gélatine ou un équivalent.

Le brevet US A 4 421 778 (KAHN 12/83) concerne un produit de type "milk-shake" qui est foisonné pour être ensuite conservé à température de congélation et cuillérable ou extrudable à cette température.
Ce brevet US concerne un produit fouetté, contenant donc une proportion importante d'air : mention est faite du temps de conservation de six mois sans perte importante de volume correspondant au dégonflement du produit et à son tassement.

En ce qui concerne les matières grasses, KAHN cite l'utilisation d'une matière grasse spécifique évitant la formation de faces cristallines et donc la cristallisation des matières grasses.

Le brevet US A 4 853 243 (KAHN 8/89) concerne un produit fouetté dont l'originalité réside dans la limitation de cristallisation. La philosophie est d'utiliser un prémix que l'on traite par la suite, après décongélation et fouettage. Il s'agit encore d'un produit proche du précédent et la cuillérabilité à température de congélation résulte de son contenu d'air élevé. On note que l'auteur n'accorde pas d'importance au point de fusion des matières grasses employées, ni au choix des sucres du mélange sucrant.

Le brevet GB A 1 563 191 (UNILEVER 3/80) décrit un abaissement du point de congélation par utilisation d'un mélange d'agents stabilisants et de polyols (glycérol ou sorbitol).

Le brevet US 5 084 295 décrit un dessert glacé à basses calories pompable. Les composants de ce brevet sont de nature tout a fait différente de ceux de la présente invention et ne vise pas le même objectif, le but du brevet US étant d'obtenir un produit basses calories avant tout.

Le brevet US 4 244 977 décrit une crème glacé qui combine les avantages du stockage à basse température et la facilité de manipulation. Dans ce brevet, la maléabilité du produit à une température de -12°C est essentiellement obtenue en agissant sur la composition en sucres du produit uniquement. Selon ce brevet pour obtenir un produit cuillérable, le taux de sucre doit être très important ce qui confère un produit au goût beaucoup trop sucré.

Il est apparu que fréquemment les stabilisateurs doivent être utilisés dans de telles proportions que la perception en bouche et le goût du produit obtenu peuvent être altérés de même que son aspect qui peut devenir gommeux avec un goût de gras.
De même, l'utilisation d'agents sucrants à faible poids moléculaire peut affecter le goût du produit si la composition des agents sucrants n'est pas étroitement maîtrisée.

Les polyols ou glycérols utilisés pour abaisser le point de congélation présentent en outre l'inconvénient de n'être pas digestibles par l'homme et d'avoir des effets laxatifs.

La présente invention vise à obvier à ces inconvénients tout en permettant la réalisation d'un dessert glacé cuillérable à température de congélation et susceptible d'être conditionné en récipient sous pression.
Ce résultat est obtenu par une sélection de la matière grasse d'origine végétale à très bas point de fusion et par la sélection d'un mélange de matières sucrantes spécifiques à faible poids moléculaire et par mélange avec des protéines d'origine laitières.

A cet effet, le dessert glacé selon l'invention dont la composition comprend des protéines d'origine laitière, des matières grasses, des matières sucrantes et un ou des agents stabilisants se caractérise essentiellement en ce que :
- les protéines sont apportées par des produits lacto-remplaceurs d'origine laitière et/ou du lait écrémé comprenant 20% à 40% de protéines par rapport au produit brut ;
- la matière grasse utilisée est une huile d'origine végétale à bas point de fusion ;
- les matières sucrantes sont un mélange d'agents sucrants de poids moléculaire plus faible que celui du saccharose, ledit mélange comprenant dextrose et/ou fructose, sucre inverti et sirop de glucose de sorte que le pourcentage de dextrose global (provenant du dextrose mono-hydraté standard et du sirop de glucose) des substances sucrantes se situe entre 6% et 30%.

Suivant une autre caractéristique de l'invention, le mélange de matières sucrantes comprend :
- dextrose et/ou fructose,
- sucre inverti,
- sirop de glucose,
et dans lequel,
- le sucre inverti a un pourcentage d'inversion égal élevé par exemple égal à 93 plus ou moins 3 ;
- le sirop de glucose a un dextrose équivalent de l'ordre de 40% par exemple compris entre 35 et 70%.

D'autres avantages et caractéristiques de l'invention apparaîtront à la lecture de la description ci-après de l'invention et de son procédé de mise en oeuvre.

Le dessert glacé selon l'invention est du type réalisé par un mélange de protéines d'origine laitière, de matières grasses et de matières sucrantes.
Ce mélange est destiné à être congelé après réalisation et à être distribué en état de congélation au consommateur, soit en portion individuelle, soit en ration à diviser en portion, soit en emballage sous pression.

La ration en portion peut être conditionnée dans un emballage unitaire tel qu'un petit pot.
Tout autre type d'emploi peut être mis en oeuvre tel que le fourrage d'un gâteau surgelé à découper ou autre.
Le produit selon l'invention peut également être distribué sous forme liquide traitée UHT et être soumis à congélation par l'utilisateur.

La difficulté à solutionner est :
- premièrement de réaliser un produit qui dans la plage de température de moins 18° centigrades à moins 24° centigrades, soit à la fois suffisamment souple pour être cuillérable sans qu'il soit nécessaire que le produit soit foisonné par incorporation de gaz, ou passer sous pression au travers d'une buse d'un récipient dans lequel le produit est conditionné en pression ;
- deuxièmement, de réaliser un produit stable physiquement pendant le temps de consommation tout en présentant les qualités organoleptiques d'une glace.

L'idée de départ a été de jouer sur les trois composants fondamentaux, sucres, matières grasses et protéines, sur leurs pourcentages relatifs et sur la nature des dits composants et/ou des ingrédients de chacun d'eux afin d'abaisser le point de congélation du mélange.

Il est apparu que les ingrédients protéiques ont une influence essentiellement sur la stabilité et la texture de la glace, notamment en sortie de buse lorsqu'elle est conditionnée en récipient sous pression.
Il est apparu que la nature des ingrédients protéiques, lait écrémé ou lacto-remplaceurs, le taux d'incorporation et la composition des ingrédients protéiques ont une influence sur la texture de la glace à température de congélation.

Il est apparu au cours des essais que le taux d'ingrédients protéiques devait être compris entre 6% et 18%.
En dessous de 6%, la texture du produit est bien fluide mais celui-ci manque de tenue et de stabilité.
Au-dessus de 18%, le produit est trop ferme.
Dans la fourchette de 6% à 18%, le produit reste malléable en étant plus ferme si on augmente le taux de protéines.

Les produits protéiques peuvent être constitués de lacto-remplaceurs seuls ou d'un mélange de lacto-remplaceurs et de lait écrémé en poudre ou de ce dernier ingrédient seul.

Avantageusement, les lacto-remplaceurs sont des produits en poudre d'origine laitière composés principalement de protéines d'origine sériques et comprenant 20% à 40% de protéines.
Les pourcentages mentionnés sont donnés de poids en poids.

Différentes matières sucrantes ont été testées en remplacement du saccharose, ces matières étant de poids moléculaire plus faible pour abaisser le point de congélation.
Trois types de mélanges de matières sucrantes ont été déterminés à cet effet qui donnent sensiblement le même résultat au niveau de la texture cuillérable mais différent par la saveur sucrée.

Le premier mélange ou première combinaison comprend un pourcentage total de sucres exprimés par rapport à la formule globale de 24,6% en matières sèches, dont :
- dextrose ou fructose : 8,2%,
- sucre inverti : 8,2%,
- sirop de glucose : 8,2%.
Avec ce type de mélange, la saveur sucrée est assez accentuée.

Le deuxième mélange ou deuxième combinaison présente un pourcentage total de sucres exprimés par rapport à la formule globale de 20,3% en matières sèches dont :
- dextrose ou fructose : 10,0%,
- sucre inverti : 3,3%,
- sirop de glucose : 7,0%.
Avec ce deuxième type de mélange, la saveur sucrée est moins intense qu'avec le premier.

Le troisième mélange ou troisième combinaison d'agents sucrants comprend un total de sucres exprimés par rapport à la formule globale de 20,3% en matières sèches, dont :
- dextrose ou fructose : 13,3%,
- sirop de glucose : 7,0%.

Le sirop de glucose utilisé a une composition hydrocarbonée comprenant environ 49% de glucose et 26% de saccharides.
Le sucre inverti est caractérisé par un degré d'inversion élevé (pourcentage de saccharose hydrolysé) de l'ordre de 93% plus ou moins 3%.
Le sirop de glucose utilisé présente un dextrose équivalent de l'ordre de 70% par exemple compris entre 69,7% et 73,7%.

Il est possible dans le cadre de l'invention d'utiliser un sirop de glucose à bas dextrose équivalent par exemple entre 35% à 70%, par exemple les sirops de glucose utilisés peuvent donc avoir un dextrose équivalent compris aux alentours de 40% et une composition glucidique avec par exemple, 15% de dextrose et 10% de disaccharides, et un dextrose équivalent compris aux alentours de 70% et une composition glucidique avec par exemple 28% de dextrose et 50% de disaccharides, ou 49% de glucose et 26% de disaccharides.

Les différentes combinaisons de substances sucrantes sont données en dextrose équivalent global donné par le pourcentage de dextrose monohydraté d'une part et le pourcentage de dextrose présent dans le sirop de glucose.

Les combinaisons de matière sucrante ont en commun leur dextrose équivalent et il est possible dans le cadre de l'invention, d'utiliser un sirop de glucose à bas dextrose équivalent.
Le pourcentage de dextrose global (provenant du dextrose monohydraté standard et du sirop de glucose) se situe entre 6% et 30%.

Il a été observé que plus on augmente le pourcentage de dextrose, plus le produit obtenu est souple et malléable.
Il est possible d'utiliser du fructose en substitution totale ou partielle du dextrose ; le résultat obtenu est satisfaisant au niveau de la texture avec cependant, un goût plus sucré.

De même, le sucre inverti peut être utilisé en substitution totale ou partielle du dextrose et donne de bons résultats au niveau texture.
Cependant, dans ce cas, le goût sucré prononcé doit être caché par incorporation, par exemple, de substances amérisantes.

La matière grasse utilisée est l'un des principaux facteurs jouant sur la texture finale du produit et dans l'obtention d'une texture qui ne soit pas, à température de congélation, trop ferme.
Différents essais ont démontré que la matière grasse à bas point de congélation la plus apte était l'huile de tournesol dont la solidification débute à environ moins cinq degrés centigrades pour être totale à environ moins vingt cinq degrés centigrades.
Cette huile est caractérisée par un bas point de fusion.

Les pourcentages d'incorporation optimum pour parvenir au résultat escompté sont compris entre 6% et 24%.
En dessous de 6%, le produit obtenu est trop ferme, ce qui notamment le rend impropre à un conditionnement en récipient sous pression.
Au-delà de 24%, le produit obtenu est malléable mais avec un aspect filant et il commence à devenir limite au niveau du goût avec un goût de gras un peu trop persistant.

Entre 6% et 24%, plus on augmente la proportion d'huile de tournesol et plus la glace est souple et fluide et plus elle a de corps en bouche lors de la dégustation.
Il va de soi que d'autres matières grasses d'origine végétale à caractéristiques équivalentes à celles de l'huile de tournesol sont susceptibles d'être utilisées.

Une composition type du produit selon l'invention peut être la suivante :
- huile de tournesol : 16,5% à 18,5%,
- lait écrémé en poudre :
   (ou lacto-remplaceur) : 11,6% à 10%,
- dextrose : 13,3%,
- sirop de glucose : 8,8%,
- stabilisant : 0,6% à 0,3%,
- lait écrémé liquide : 49,0% à 49,1%.
Pour obtenir une substance suffisamment souple, il est apparu préférable de combiner un taux élevé de matières grasses, quand le taux de substance sucrante est dans le bas de la fourchette et un taux de substance sucrante élevé quand le taux de matière grasse est dans le bas de la fourchette.
On peut, par exemple, avoir les compositions suivantes :
- huile de tournesol : 20% huile de tournesol : 15%
- lait écr. en poudre : 11,6% lait écr. en poudre : 11,6
   (ou lactoremplaceur) (ou lactoremplaceur)
- dextrose : 10% dextrose : 15%
- sirop de glucose : 8,8% sirop de glucose : 8,8%
- stabilisant : 0,6% stabilisant : 0,6%
- lait écr. liquide : 49% lait écr. liquide : 49%.

Suivant une autre forme de réalisation de l'invention, il est possible d'intégrer à la composition des polyols ou sucre alcool.
A titre d'exemple, un sorbitol peut être ajouté dans une proportion de 3 à 5% ; dans ce cas, la proportion de dextrose passe de 13,3% à 10,3%.

Il est apparu également possible d'utiliser des substances comme des polyols, de l'éthanol ou même des sucres comme le galactose qui seraient susceptibles de diminuer le point de congélation.

La mise en oeuvre des ingrédients s'effectue en préparant tous les constituants sous forme liquide, le lait écrémé liquide et l'huile de tournesol.
Les constituants liquides sont soumis à un mélange à chaud sous l'action d'un agitateur.
Sont alors apportés le lait écrémé en poudre et les stabilisants en poudre.
Les stabilisants sont un mélange de mono et diglycérides d'acides gras avec éventuellement de la caroube, guar, carraghénates, alginates, gélatine, etc...
Les stabilisants sont choisis de façon à adapter la texture et la stabilisation du dessert glacé.
Cet apport se fait sous agitation. Il est préférable de porter le mélange à une température d'au moins 65°C à 70°centigrades, avant d'ajouter les sucres, afin de bien solubiliser les agents stabilisants.
Les sucres sont alors ajoutés et la température est portée ou maintenue aux alentours de 70°C.
L'extrait sec est alors ajusté aux alentours de 45% avec de l'eau si nécessaire. Il est également possible de ne chauffer que le lait écrémé liquide et d'ajouter l'huile de tournesol après le lait écrémé en poudre et le stabilisant.

La préparation est ensuite homogénéisée au moyen d'un homogénéisateur pour obtenir une distribution homogène de globules gras de petit diamètre. On peut pratiquer une homogénéisation avant et après le traitement thermique.

L'homogénéisation a une importance sur la stabilité du produit lorsqu'il est sous forme non congelé.
Elle est également importante pour la texture finale du produit. Une technique intéressante pour avoir des globules gras de taille correcte sans changer la texture est de réaliser une pré-émulsion de tous les ingrédients sauf les substances sucrantes.
La pression d'homogénéisation se situe de 25 bars à 200 bars.
La préparation est ensuite soumise à maturation pendant un temps variant de quelques heures à une nuit en froid positif par exemple à +3°C. Cette maturation peut s'effectuer conjointement à un brassage du produit.
La préparation peut ensuite être surgelée directement ou traitée UHT puis mise en récipient sous pression et surgelée ensuite.
La préparation peut subir un traitement de type UHT en direct par injection de vapeur ou pulvérisation dans de la vapeur.

La mise en récipient sous pression peut également être effectuée directement après pasteurisation ou traitement UHT, la maturation et la congélation intervenant ensuite.

La surgélation s'effectue en enceinte réfrigérée entre - 18°et -24°. La conservation du produit obtenu s'effectue en enceinte réfrigérée à température comprise entre moins 18°centigrades et moins 24°centigrades.

Le conditionnement peut en fonction des conditions de commercialisation et d'emploi être effectué en pot ou en récipient sous pression.
Les récipients sous pression peuvent être du type siphon ou du type bombe à pression.

## Revendications

1. Dessert glacé dont la composition comprend des protéines d'origine laitière, des matières grasses, des matières sucrantes, un ou des agents stabilisants, le dit dessert étant malléable et extrudable à température de congélation sans incorporation d'air ou autre gaz caractérisé en ce que :
- les protéines sont apportées par des produits lacto-remplaceurs d'origine laitière et/ou du lait écrémé comprenant 20 à 40% de protéines par rapport au produit brut ;
- la matière grasse est une huile d'origine végétale à bas point de fusion ;
- les matières sucrantes sont constituées par un mélange d'agents sucrants de poids moléculaire, plus faible que celui du saccharose, ledit mélange comprenant dextrose et/ou fructose, sucre inverti et sirop de glucose, de sorte que le pourcentage de dextrose global (provenant du dextrose mono-hydraté standard et du sirop de glucose) représente entre 6% et 30% de la formule globale, le fructose et le sucre inverti pouvant être chacun utilisés en substitution totale ou partielle dudit dextrose.

2. Dessert glacé selon la revendication 1 caractérisé en ce que l'huile végétale est une huile de tournesol.

3. Dessert glacé selon la revendication 1 caractérisé en ce que le sucre inverti utilisé se caractérise par un pourcentage de degré d'inversion élevé égal par exemple à 93% plus ou moins 3%.

4. Dessert glacé selon la revendication 1 caractérisé en ce que le sirop de glucose a un dextrose équivalent compris entre 69,7% et 73,7%.

5. Dessert glacé selon la revendication 1 caractérisé en ce que le sirop de glucose a une composition hydrocarbonée comprenant 49% de glucose et 26% de saccharides.

6. Dessert glacé selon la revendication 1 et l'une quelconque des revendications 2 à 5 caractérisé en ce qu'il comprend :
- huile de tournesol : 16,5% à 18,5%,
- lait écrémé en poudre :
(ou lactoremplaceur) : 11,6% à 10%,
- dextrose : 13,3%,
- sirop de glucose : 8,8%,
- stabilisant : 0,6% à 0,3%,
- lait écrémé liquide : 49% à 49,1%.

7. Dessert glacé selon la revendication 1 caractérisé en ce que le mélange d'agents sucrants présente un pourcentage total de sucres exprimés par rapport à la formule globale de 24,6% en matières sèches, dont :
- dextrose ou fructose : 8,2%,
- sucre inverti : 8,2%,
- sirop de glucose : 8,2%.

8. Dessert glacé selon la revendication 1 caractérisé en ce que le mélange d'agents sucrants présente un pourcentage total de sucres exprimés par rapport à la formule globale de 20,3% en matières sèches, dont :
- dextrose ou fructose : 10,0%,
- sucre inverti : 3,3%,
- sirop de glucose : 7,0%.

9. Dessert glacé selon la revendication 1 caractérisé en ce que le taux de protéines est compris entre 6 à 18%.

10. Dessert glacé selon la revendication 1 caractérisé en ce que le mélange d'agents sucrants comprend un total de sucres exprimés par rapport à la formule globale de 20,3% en matières sèches, dont :
- dextrose ou fructose : 13,3%,
- sirop de glucose : 7,0%.

11. Procédé de fabrication d'un dessert glacé comprenant des protéines d'origine laitière, des matières grasses, des matières sucrantes, ou des agents stabilisants, ledit dessert étant malléable et extrudable à température de congélation sans incorporation d'air ou- de gaz mettant en oeuvre les composants selon les revendications 1 à 10 caractérisé en ce que :
- le lait écrémé liquide et l'huile sont mélangés (sous forme liquide) et conjointement chauffés ;
- le lait écrémé en poudre et l'agent stabilisant sont alors apportés, le mélange étant porté à une température de préférence de 65°C à 70°C ;
- les substances sucrantes sont ajoutées ;
- l'extrait sec est ajusté aux alentours de 45% avec de l'eau si nécessaire ;
- la préparation est homogénéisée à une pression entre 25 et 200 bars ;
- la préparation subit une maturation sous froid positif avec éventuellement une agitation ;
- la préparation est surgelée pour avoir une température finale comprise entre-18°C et-24°C.

12. Procédé de fabrication selon la revendication 11 caractérisé en ce que le mélange est conditionné à la pression atmosphérique en pots après surgélation.

13. Dessert glacé selon la revendication 1 caractérisé en ce que le taux de matière grasse se situe entre 6% et 24%.

14. Dessert glacé selon les revendications 1 et 13 caractérisé en ce que le taux de matière grasse est élevé quand le taux de substances sucrantes est dans le bas de la fourchette.

15. Dessert glacé selon les revendications 1 et 13 caractérisé en ce que le taux de substances sucrantes est élevé quand le taux de matière grasse est dans le bas de la fourchette.

16. Dessert glacé selon la revendication 1 caractérisé en ce que le sirop de glucose a un dextrose équivalent compris entre 35% et 70%.

17. Dessert glacé selon la revendication 1 caractérisé en ce que les sirops de glucose utilisés ont un dextrose équivalent compris aux alentours de 40% et une composition glucidique avec par exemple 15% de dextrose et 10% de disaccharides.

18. Dessert glacé selon la revendication 1 caractérisé en ce que les sirops de glucose ont un dextrose équivalent compris entre 69,7% et 73,7% et une composition glucidique avec par exemple 28% de dextrose et 50% de disaccharides ou 49% de glucose et 26% de saccharides.

## Patentansprüche

1. Eis-Dessert, dessen Zusammensetzung Milchproteine, Fette, Süßstoffe, einen oder mehrere Stabilisatoren umfasst, wobei das besagte Dessert mit einer Temperatur um den Gefrierpunkt formbar und ohne die Hinzufügung von Luft oder eines anderen Gases spritzbar ist, dadurch gekennzeichnet, dass
- die Proteine von Milchersatzerzeugnissen mit Milchherkunft und/oder aus entrahmter Milch stammen, die 20 bis 40% Proteine im Verhältnis zum Roherzeugnis umfasst;
- das Fett ein pflanzliches Öl mit niedrigem Schmelzpunkt ist;
- die Süßstoffe eine Mischung von Süßmitteln mit einem Molekulargewicht geringer als das der Saccharose umfassen, wobei die besagte Mischung Dextrose und/oder Fructose, Invertzucker und Glukosesirup enthält, so dass der Prozentsatz von Gesamtdextrose (mit Herkunft aus monohydratischer Standarddextrose und Glukosesirup) zwischen 6% und 30% der Gesamtzusammensetzung beträgt, wobei die Fructose und der Invertzucker jeweils als vollständiger oder teilweiser Ersatz für die besagte Dextrose verwendet werden können.

2. Eis-Dessert gemäß Anspruch 1, dadurch gekennzeichnet, dass das Pflanzenöl ein Sonnenblumenöl ist.

3. Eis-Dessert gemäß Anspruch 1, dadurch gekennzeichnet, dass der verwendete Invertzukker sich durch einen erhöhten Prozentsatz der Inversion auszeichnet, der zum Beispiel gleich 93% plus oder minus 3% ist.

4. Eis-Dessert gemäß Anspruch 1, dadurch gekennzeichnet, dass der Glukosesirup ein Dextroseäquivalent zwischen 69,7% und 73,7% hat.

5. Eis-Dessert gemäß Anspruch 1, dadurch gekennzeichnet, dass der Glukosesirup eine Kohlenhydrat-Zusammensetzung hat, die 49% Glukose und 26% Saccharide umfasst.

6. Eis-Dessert gemäß Anspruch 1 und einer der Ansprüche 2 bis 5, dadurch gekennzeichnet, dass es umfasst:
- Sonnenblumenöl: 16,5% bis 18,5%
- Entrahmtes Milchpulver:
(oder Milchersatz): 11,6% bis 10%
- Dextrose: 13,3%
- Glukosesirup: 8,8%
- Stabilisator: 0,6% bis 0,3%
- flüssige entrahmte Milch: 49% bis 49,1%

7. Eis-Dessert gemäß Anspruch 1, dadurch gekennzeichnet, dass die Mischung von Süßmitteln einen Gesamtprozentsatz an Zucker, ausgedrückt im Verhältnis zur Gesamtzusammensetzung von 24,6% Trockenmasse, darstellt, davon:
- Dextrose oder Fructose: 8,2%
- Invertzucker: 8,2%
- Glukosesirup: 8,2%

8. Eis-Dessert gemäß Anspruch 1, dadurch gekennzeichnet, dass die Mischung von Süßmitteln einen Gesamtprozentsatz an Zucker, ausgedrückt im Verhältnis zur Gesamtzusammensetzung von 20,3% Trockenmasse, darstellt, davon:
- Dextrose oder Fructose: 10.0%
- Invertzucker: 3,3%
- Glukosesirup: 7,0%

9. Eis-Dessert gemäß Anspruch 1, dadurch gekennzeichnet, dass der Prozentsatz von Proteinen zwischen 5 bis 18% liegt.

10. Eis-Dessert gemäß Anspruch 1, dadurch gekennzeichnet, dass die Mischung von Süßmitteln einen Gesamtzucker, ausgedrückt im Verhältnis zur Gesamtzusammensetzung von 20,3% Trockenmasse, umfasst, davon:
- Dextrose oder Fructose: 13,3%
- Glukosesirup: 7,0%

11. Verfahren zur Herstellung eines Eis-Dessert, das Milchproteine, Fette, Süßstoffe oder Stabilisatoren umfasst, wobei das besagte Dessert durch Einsatz der Bestandteile gemäß der Ansprüche 1 bis 10 mit einer Temperatur um den Gefrierpunkt formbar und ohne die Hinzufügung von Luft oder Gas spritzbar ist, das durch folgendes gekennzeichnet ist:
- die entrahmte flüssige Milch und das Öl werden gemischt (in flüssiger Form) und gemeinsam erhitzt;
- das entrahmte Milchpulver und der Stabilisator werden dann hinzugefügt, wobei die Mischung auf eine Temperatur von vorzugsweise 65°C bis 70°C gebracht wird;
- die Zuckersubstanzen werden hinzugefügt;
- der Trockenauszug wird auf ungefähr 45% mit Wasser, falls erforderlich, angepasst;
- die Zubereitung wird mit einem Druck zwischen 25 und 200 bar homogenisiert;
- die Zubereitung wird einem Reifungsprozess in Kälte, eventuell mit Bewegung unterzogen;
- die Zubereitung wird tiefgefroren, um eine Endtemperatur zwischen -18°C und -24°C zu erhalten.

12. Verfahren zur Herstellung gemäß Anspruch 11, dadurch gekennzeichnet, dass die Mischung unter atmosphärischem Druck nach dem Tiefgefrieren in Töpfe verpackt wird.

13. Eis-Dessert gemäß Anspruch 1, dadurch gekennzeichnet, dass der Prozentsatz von Fett zwischen 6% und 24% liegt.

14. Eis-Dessert gemäß den Ansprüchen 1 und 13, dadurch gekennzeichnet, dass der Prozentsatz von Fett erhöht ist, wenn der Prozentsatz von Süßstoffen im niedrigen Bereich liegt.

15. Eis-Dessert gemäß den Ansprüchen 1 und 13, dadurch gekennzeichnet, dass der Prozentsatz von Süßstoffen erhöht ist, wenn der Prozentsatz von Fett im niedrigen Bereich ist.

16. Eis-Dessert gemäß Anspruch 1, dadurch gekennzeichnet, dass der Glukosesirup ein Dextroseäquivalent zwischen 35% und 70% hat.

17. Eis-Dessert gemäß Anspruch 1, dadurch gekennzeichnet, dass die eingesetzten Glukosesirups ein Dextroseäquivalent von etwa 40% und eine Kohlenhydratzusammensetzung von zum Beispiel 15% Dextrose und 10% Disacchariden haben.

18. Eis-Dessert gemäß Anspruch 1, dadurch gekennzeichnet, dass die Glukosesirups ein Dextroseäquivalent zwischen 69,7 % und 73,7 % und eine Kohlenhydratzusammensetzung von zum Beispiel 28 % Dextrose und 50 % Disacchariden oder 49 % Glukose und 26 % Sacchariden haben.

## Claims

1. Frozen dessert, the composition of which comprises proteins of dairy origin, fats, sweeteners, one or more stabilisers, said dessert being malleable and extrudable at freezing point without the incorporation of air or any other gas, characterised in that:
- the proteins are provided by milk replacer products of dairy origin and/or skimmed milk comprising 20 to 40% protein with respect to the raw product;
- the fat is a vegetable oil with a low melting point;
- the sweeteners are constituted by a mixture of sweeteners of a molecular weight lower than that of sucrose, said mixture comprising dextrose and/or fructose, invert sugar and glucose syrup, so that the overall dextrose percentage (coming from standard mono-hydrated dextrose and glucose syrup) represents between 6% and 30% of the overall formula, the fructose and the invert sugar each being useable to substitute said dextrose in whole or in part.

2. Frozen dessert according to Claim 1 characterised in that the vegetable oil is sunflower oil.

3. Frozen dessert according to Claim 1 characterised in that the invert sugar used is characterised by a high degree of inversion percentage equal for example to 93% plus or minus 3%.

4. Frozen dessert according to Claim 1 characterised in that the glucose syrup has a dextrose equivalent comprised between 69.7% and 73.7%.

5. Frozen dessert according to Claim 1 characterised in that the glucose syrup has a hydrocarbon composition comprising 49% glucose and 26% saccharides.

6. Frozen dessert according to Claim 1 and any one of Claims 2 to 5
characterised in that it comprises:
- sunflower oil: 16.5% to 18.5%,
- powdered skimmed milk:
(or milk replacer): 11.6% to 10%,
- dextrose: 13.3%,
- glucose syrup: 8.8%,
- stabiliser: 0.6% to 0.3%,
- liquid skimmed milk: 49% to 49.1%.

7. Frozen dessert according to Claim 1 characterised in that the mixture of sweeteners has a total percentage of sugars expressed with respect to the overall formula of 24.6% in dry matter, of which:
- dextrose or fructose: 8.2%,
- invert sugar: 8.2%,
- glucose syrup: 8.2%.

8. Frozen dessert according to Claim 1 characterised in that the mixture of sweeteners has a total percentage of sugars expressed with respect to the overall formula of 20.3% in dry matter, of which:
- dextrose or fructose: 10.0%,
- invert sugar: 3.3%,
- glucose syrup: 7.0%.

9. Frozen dessert according to Claim 1 characterised in that the protein rate is comprised between 6 to 18%.

10. Frozen dessert according to Claim 1 characterised in that the mixture of sweeteners has a total of sugars expressed with respect to the overall formula of 20.3% in dry matter, of which:
- dextrose or fructose: 13.3%,
- glucose syrup: 7.0%.

11. Method of manufacturing a frozen dessert comprising proteins of dairy origin, fats, sweeteners, or stabilisers, said dessert being malleable and extrudable at freezing point without the incorporation of air or gas using the components according to Claims 1 to 10, characterised in that:
- the liquid skimmed milk and the oil are mixed (in liquid form) and heated together;
- the powdered skimmed milk and the stabiliser are then added, the mixture being brought to a temperature preferably of 65°C to 70°C;
- the sweeteners are added;
- the dry matter is adjusted to the region of 45% with water if necessary;
- the preparation is homogenised at a pressure of between 25 and 200 bar;
- the preparation undergoes ripening in positive refrigeration, optionally with agitation;
- the preparation is frozen to reach a final temperature comprised between -18°C and-24°C.

12. Manufacturing method according to Claim 11 characterised in that the mixture is packed at atmospheric pressure in pots after freezing.

13. Frozen dessert according to Claim 1 characterised in that the fat rate is between 6% and 24%.

14. Frozen dessert according to Claims 1 and 13 characterised in that the fat rate is high when the sweetener rate is at the lower end of the range.

15. Frozen dessert according to Claims 1 and 13 characterised in that the sweetener rate is high when the fat rate is at the lower end of the range.

16. Frozen dessert according to Claim 1 characterised in that glucose syrup has a dextrose equivalent comprised between 35% and 70%.

17. Frozen dessert according to Claim 1 characterised in that the glucose syrups used have a dextrose equivalent comprised in the region of 40% and a sugar composition with for example 15% dextrose and 10% disaccharides.

18. Frozen dessert according to Claim 1 characterised in that the glucose syrups have a dextrose equivalent comprised between 69.7% and 73.7% and a sugar composition with for example 28% dextrose and 50% disaccharides or 49% glucose and 26% saccharides.
